(19) Europäisches Patentamt / European Patent Office / Office européen des brevets

(11) **EP 4 553 535 B1**

(12) **EUROPÄISCHE PATENTSCHRIFT**

(45) Veröffentlichungstag und Bekanntmachung des Hinweises auf die Patenterteilung:
**29.04.2026  Patentblatt 2026/18**

(21) Anmeldenummer: **23208625.6**

(22) Anmeldetag: **08.11.2023**

(51) Internationale Patentklassifikation (IPC):
*G01S 7/481* (2006.01)    *G01S 7/499* (2006.01)
*G01S 17/36* (2006.01)    *G01S 17/894* (2020.01)

(52) Gemeinsame Patentklassifikation (CPC):
**G01S 7/499; G01S 7/4816; G01S 17/36; G01S 17/894**

(54) **OPTOELEKTRONISCHER SENSOR ZUR ENTFERNUNGSMESSUNG**

OPTOELECTRONIC SENSOR FOR MEASURING DISTANCE

CAPTEUR OPTOÉLECTRONIQUE POUR MESURE DE DISTANCE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**14.05.2025  Patentblatt 2025/20**

(73) Patentinhaber: **SICK AG**
**79183 Waldkirch (DE)**

(72) Erfinder:
• **MENZEL, Christoph**
**79211 Denzlingen (DE)**
• **JAHN, Axel**
**79183 Waldkirch (DE)**

(74) Vertreter: **Manitz Finsterwald**
**Patent- und Rechtsanwaltspartnerschaft mbB**
**Martin-Greif-Straße 1**
**80336 München (DE)**

(56) Entgegenhaltungen:
WO-A1-2020/021306      DE-A1- 102020 107 450
US-A1- 2020 326 563

**Beschreibung**

Die vorliegende Erfindung betrifft einen optoelektronischen Sensor zur Entfernungsmessung. Der Sensor umfasst eine Lichtquelle, welche dazu ausgebildet, ein Sendesignal in Sendelicht umzuwandeln und das Sendelicht in eine Umgebung auszusenden. Der Sensor umfasst ferner einen Lichtempfänger, welcher von Objekten in der Umgebung zurückgestrahltes Sendelicht als Empfangslicht empfängt, wobei der Lichtempfänger mehrere, insbesondere separate, Empfangselemente zur Entfernungsmessung aufweist.

Derartige optoelektronische Sensoren zur Entfernungsmessung sind grundsätzlich bekannt, wobei mit diesen beispielsweise mittels des indirekten Laufzeitverfahrens (iTOF - indirect Time Of Flight) Entfernungen zu Objekten in der Umgebung ermittelt werden können. Aus den Entfernungen zu verschiedenen Objekten oder zu verschiedenen Punkten des Objekts kann der optoelektronische Sensor dann beispielsweise ein Tiefenbild erzeugen.

Schwierigkeiten kann solchen optoelektronischen Sensoren eine Entfernungsmessung bereiten, wenn es zu einem sogenannten Mehrwegeempfang kommt, d.h. Empfangslicht von unterschiedlichen Objekten und/oder aus unterschiedlichen Distanzen auf dasselbe Empfangselement trifft. Dies kann beispielsweise zu Distanzmessfehlern, Artefakten und/oder Geisterbildern führen. Zudem kann der Dynamikbereich des Sensors eingeschränkt werden, was insbesondere bei kontrastreichen oder besonders kontrastarmen Objekten die Tiefenauflösung negativ beeinflussen kann.

Die Druckschrift DE 10 2020 107450 A1 offenbart einen optoelektronischen Sensor gemäß dem Oberbegriff des Anspruchs 1 und ein Verfahren zur Entfernungsmessung mittels eines optoelektronischen Sensors gemäß dem Oberbegriff des Anspruchs 13. Die Druckschriften WO 20201021306 A1 und US 20201326563 A1 offenbaren verwandte Sensoren und Verfahren.

Es ist daher eine der Erfindung zugrundeliegende Aufgabe, einen optoelektronischen Sensor der eingangs genannten Art derart weiterzubilden, dass dieser verbesserte Messergebnisse liefert, insbesondere bei Signalen aus Mehrwegeempfang.

Diese Aufgabe wird durch einen optoelektronischen Sensor gemäß Anspruch 1 gelöst.

Der erfindungsgemäße optoelektronische Sensor zeichnet sich dadurch aus, dass der Lichtempfänger zumindest ein Polarisationselement umfasst, welches ausgebildet ist, Empfangslicht mit einer ersten Polarisation einem (ersten) der Empfangselemente und Empfangslicht mit einer zweiten Polarisation, welche von der ersten Polarisation verschieden ist, einem anderem (zweiten) der Empfangselemente zuzuführen.

Anders ausgedrückt können jeweils unterschiedliche Polarisationen unterschiedlichen Empfangselementen zugeführt werden. Die Erfindung setzt dabei auf der Erkenntnis auf, dass insbesondere bei Mehrwegeempfang das Empfangslicht, welches von unterschiedlichen Objekten abgestrahlt wurde, meist auch unterschiedlich polarisiert ist. Durch die Verwendung des Polarisationselements kann einem einzelnen Empfangselement somit nur noch Empfangslicht zugeführt werden, welches von einem einzelnen Objekt stammt, wohingegen Empfangslicht, welches von einem anderen Objekt stammt und welches herkömmlicherweise auf dasselbe Empfangselement getroffen wäre, durch das Polarisationselement an ein anderes Empfangselement geleitet wird.

Wird beispielsweise mit dem optoelektronischen Sensor ein Gebinde von Plastikflaschen betrachtet, welches mit einer Plastikfolie überzogen ist, so kann das Sendelicht zum einen von der Plastikfolie aber zum anderen auch von einer weitere innen im Gebinde liegenden Wand einer Plastikflasche zu dem optoelektronischen Sensor zurückgestrahlt werden. Herkömmlicherweise könnte sich nun das Empfangslicht der Plastikfolie und das Empfangslicht der Wandung der Plastikflasche in einem Empfangselement überlagern, was zu uneindeutigen Messergebnissen führen kann. Wird nun aber davon ausgegangen, dass das Empfangslicht der Plastikfolie anders polarisiert ist als das Empfangslicht der Plastikflasche, so wird erfindungsgemäß das Empfangslicht der Plastikfolie einem anderen Empfangselement zugeführt als das Empfangslicht der Plastikflasche. Auf diese Weise kann die Uneindeutigkeit des Signals aufgelöst werden. Zudem existiert der Vorteil, dass die beiden verschiedenen Empfangselemente separat ausgewertet werden können, wodurch sich sowohl die Entfernung zur Plastikfolie als auch zur Wandung der Plastikflasche ermitteln lässt.

Insbesondere dienen die Empfangselemente dazu, eine Lichtlaufzeit zu dem Objekt zu ermitteln. Bevorzugt erfassen die Empfangselemente dazu eine Phasendifferenz zwischen dem Sendesignal und/oder dem Sendelicht einerseits und dem Empfangslicht (und gegebenenfalls einem aus dem Empfangslicht erzeugten Empfangssignal) andererseits. Anhand des Phasenunterschieds kann dann die Lichtlaufzeit und daraus die Entfernung zum Objekt ermittelt werden. Wie oben ausgeführt, wird die Entfernungsmessung mittels Phasendifferenz auch als iTOF bezeichnet.

Die Empfangselemente können jeweils separat zueinander ausgebildet sein, d.h. beispielsweise separate Sensoren sein. Insbesondere können die Empfangselemente Teil eines Bildsensors sein, so dass sich mittels des optoelektronischen Sensors ein Tiefenbild ermitteln lässt.

Mit der hierin genannten Polarisation kann insbesondere eine Polarisationsrichtung (z.B. vertikal) gemeint sein. Es sind aber auch andere Polarisationen möglich, beispielsweise eine zirkulare Polarisierung.

Wird von dem Polarisationselement die erste Polarisation einem (ersten) der Empfangselemente zugeführt und die zweite Polarisation einem anderen der Empfangselemente zugeführt, so bedeutet dies, dass das entsprechend polarisierte Empfangslicht überwiegend (beispielsweise zu mehr als 50%, zu mehr als 80% oder zu mehr als 90%) oder nahezu ausschließlich den entsprechenden Empfangselementen zugeführt wird. Es versteht sich, dass bei nebeneinander angeordneten Empfangselementen ein gewisser Streulichtanteil nicht ausgeschlossen werden kann.

Weiterbildungen der Erfindung sind in der Beschreibung, den Zeichnungen sowie den Unteransprüchen angegeben.

Gemäß einer ersten Ausführungsform bilden jeweils mehrere der Empfangselemente eine Gruppe, wobei zumindest einer der Gruppen ein separates Polarisationselement zugeordnet ist, welches Empfangslicht den Empfangselementen der Gruppe zuführt. Beispielsweise können die Gruppen aus z.B. zwei, drei, vier oder auch noch mehr Empfangselementen bestehen. Die genannten Zahlen können zumindest für eine der Gruppen, bevorzugt für mehrere oder alle der Gruppen gelten.

Das der Gruppe zugeordnete Polarisationselement kann dann unterschiedlich polarisiertes Empfangslicht unterschiedlichen Empfangselementen der Gruppe zuführen. Beispielsweise kann im Winkel von 0° linear polarisiertes Empfangslicht einem ersten Empfangselement der Gruppe zugeführt werden, wohingegen in einem Winkel von 45° polarisiertes Empfangslicht einem zweiten Empfangselement der Gruppe zugeführt wird. Empfangslicht mit einer Polarisationsrichtung von 90° und 135° kann dementsprechend einem dritten bzw. vierten Empfangselement der Gruppe zugeführt werden. Beispielsweise können sämtliche Empfangselemente des Lichtempfängers solchen Gruppen zugeordnet sein, wobei jeder Gruppe ein entsprechendes Polarisationselement zugeordnet ist. Das zugeordnete Polarisationselement kann beispielsweise direkt oberhalb der Empfangselemente angeordnet sein, so dass Empfangslicht zuerst durch das Polarisationselement hindurchtritt und dann auf die Empfangselemente trifft.

Empfangslicht, welches auf ein Polarisationselement trifft, wird bevorzugt überwiegend, d.h. wiederum zumindest zu beispielsweise 50%, 80% oder 90%, an die Empfangselemente der zugeordneten Gruppe zugeführt. Die Fläche des Polarisationselements, insbesondere auf welche Empfangslicht treffen kann, kann - in der Draufsicht - insbesondere dieselbe Form und/oder Größe haben, wie die Gruppe der Empfangselemente.

Gemäß einer weiteren Ausführungsform umfasst das zumindest eine Polarisationselement zumindest zwei oder drei, bevorzugt vier, Polarisationsfilter, wobei die verschiedenen Polarisationsfilter jeweils für Empfangslicht unterschiedlicher Polarisationen durchlässig sind, wobei bevorzugt jeder Polarisationsfilter nur einem Empfangselement zugeordnet ist und im Wesentlichen Empfangslicht nur dem zugeordneten Empfangselement zuführt. Insbesondere können auch die Mehrzahl und/oder alle Polarisationselemente den genannten Aufbau aus Polarisationsfiltern umfassen. Umfasst das Polarisationselement beispielsweise zwei Polarisationsfilter, so kann die Polarisationsrichtung der beiden Polarisationsfilter um 90° verschieden sein. Bei vier Filtern kann die Polarisationsrichtung jeweils um 45° verschieden sein (bei linearer Polarisation). Andere Polarisationen, wie beispielsweise zirkulare Polarisation sind für die Polarisationsfilter ebenfalls möglich.

Die Fläche der einzelnen Filter eines Polarisationselements kann jeweils die gleiche Größe und/oder Form aufweisen, wie die anderen Filter desselben Polarisationselements. Beispielsweise können die Polarisationsfilter quadratisch aufgebaut sein, so dass sich bei vier Filtern wiederum ein Quadrat für die Form des Polarisationselements ergibt. Daraus folgt, dass Empfangslicht einer Polarisation nur zu etwa einem Viertel (bzw. durch ein Viertel der Fläche) durch den Polarisationsfilter durchtritt. Bei vier Filtern und vier Empfangselementen kann beispielsweise das erste Empfangselement horizontal polarisiertes Licht, das zweite Empfangselement um 45° polarisiertes Licht, das dritte Empfangselement vertikal polarisiertes Empfangslicht und das vierte Empfangselement um 135° polarisiertes Empfangslicht empfangen. Der vorstehend genutzte Ausdruck "im Wesentlichen" soll dabei bedeuten, dass zum Beispiel mehr als 50% oder mehr als 80% oder 90% des Empfangslichts bzw. dessen Lichtstroms dem jeweils zugeordneten Empfangselement zugeführt werden.

Das zumindest eine Polarisationselement umfasst einen Polarisationsrouter, welcher Empfangslicht unterschiedlicher Polarisation unterschiedlichen Empfangselementen zuführt. Der Polarisationsrouter kann in dem optoelektronischen Sensor in Kombination mit den Polarisationsfiltern eingesetzt werden. Bevorzugt finden in dem optoelektronischen Sensor aber entweder nur Polarisationsfilter oder nur Polarisationsrouter Anwendung. Polarisationsrouter sind dem Fachmann grundsätzlich bekannt. Der Polarisationsrouter kann insbesondere ausgebildet sein, eine erste Polarisation in eine erste Richtung und eine zweite, andere, Polarisation in eine zweite Richtung abzulenken, welche von der ersten Richtung verschieden ist. Dadurch kann der Polarisationsrouter wiederum verschiedenen Empfangselementen verschiedene Polarisationen zuführen. Insbesondere kann auch der Polarisationsrouter ausgebildet sein, eine vorbestimmte Polarisation im Wesentlichen nur einem der Empfangselemente zuzuführen (wobei, wie oben, wiederum zumindest 50%, 80% oder 90% des Empfangslichts gemeint sind). Bei dem Polarisationsrouter ergibt sich dabei der Vorteil, dass nahezu sämtliches Empfangslicht, welches auf den Polarisationsrouter auftrifft, durch den Polarisationsrouter weitergeleitet wird. Im Gegensatz zu den Polarisationsfiltern entsteht hier somit kein Lichtverlust.

Gemäß einer weiteren vorteilhaften Ausführungsform umfasst zumindest eines der Empfangselemente ein Lock-in-Pixel, insbesondere ein 4-Tap-Lock-In-Pixel. Bevorzugt können die Mehrheit der Empfangselemente oder sämtliche Empfangselemente ein derartiges Lock-in-Pixel umfassen. Die Lock-in-Pixel können auch als iTOF-Pixel bezeichnet werden. Die Lock-in-Pixel sind dem Fachmann grundsätzlich bekannt, wobei die Lock-in-Pixel insbesondere verschiedene Bins bzw. Taps umfassen können, in welchen durch Empfangslicht erzeugte elektrische Ladungen gesammelt werden, die durch Empfangslicht zu verschiedenen Zeitpunkten des Empfangs erzeugt wurden. Die Bins bzw. Taps können auch als Reservoirs bezeichnet werden, in welche mit dem Sendesignal elektronisch modulierte Lock-in-Pixel durch den fotoelektrischen Effekt erzeugte Elektronen leiten.

Das oder die Lock-in-Pixel können durch das Sendesignal angesteuert werden, d.h. mit der Modulationsfrequenz des Sendesignals angesteuert werden, um Empfangslicht den verschiedenen Bins bzw. Taps zuzuführen. Aufgrund der verschiedenen Signale der verschiedenen Bins bzw. Taps kann eine Abtastung des Empfangssignals erfolgen, wodurch die Phasenlage und damit der Phasenunterschied zum Sendesignal ermittelt werden kann. Bei einer derartigen Auswertung der Lock-in-Pixel handelt es sich dementsprechend um eine elektronische Auswertung der Phasenlage und damit eine elektronische Bestimmung der Entfernung zu dem Objekt.

Zumindest eines der Empfangselemente umfasst eine Routingschicht und mehrere Empfangspixel, wobei die Routingschicht ausgebildet ist, auf die Routingschicht treffendes Empfangslicht zeitlich nacheinander verschiedenen der Empfangspixel zuzuführen, sodass in den Empfangspixeln mehrere Abtastwerte entstehen. Aufgrund der Abtastwerte wird die Phasenlage des Empfangslichts und damit die Phasendifferenz zwischen Sendelicht und Empfangslicht ermittelt. Insbesondere kann auch die Mehrheit der Empfangselemente oder alle Empfangselemente eine entsprechende Routingschicht und jeweils mehrere Empfangspixel umfassen. Der Einsatz der Routingschicht zusammen mit den Empfangspixeln kann insbesondere als Alternative zu den Lock-in-Pixeln verwendet werden. Die Routingschicht kann dabei im Lichtpfad des Empfangslichts den Empfangspixeln vorgelagert sein, aber nach dem Durchtreten des Empfangslichts durch das Polarisationselement angeordnet sein. Insbesondere können beispielsweise zwei, drei oder vier (aber auch höhere Anzahlen) Empfangspixel pro Empfangselement vorgesehen sein. Auf die Routingschicht auftreffendes Empfangslicht wird dann zeitlich nacheinander und insbesondere sich zyklisch wiederholend z.B. reihum an die Empfangspixel weitergeleitet. Auf diese Weise entstehen in den Empfangspixeln mehrere Abtastwerte, aufgrund derer sich wiederum die Phasenlage des Empfangslichts und damit die Phasendifferenz zwischen Sendelicht und Empfangslicht ermitteln lässt.

Gemäß einer weiteren Ausführungsform ist die Routingschicht dazu ausgebildet, das Zuführen des Empfangslicht an die verschiedenen Empfangspixel in Abhängigkeit einer Modulation des Sendelichts und/oder des Sendesignals vorzunehmen. Insbesondere kann die Routingschicht derart angesteuert werden, dass die Routingschicht während der Dauer einer Modulationsperiode des Sendesignals jedem der jeweiligen Routingschicht zugeordneten Empfangspixel einmalig Empfangslicht zuführt. Die Dauer, für welche die Routingschicht dem jeweiligen Empfangspixel Empfangslicht zuführt, kann dabei jeweils identisch sein. Auf diese Weise wird beispielsweise dem ersten Empfangspixel jeweils immer der erste Teil des Empfangslichts während einer Modulationsperiode zugeführt. Somit kann das Empfangslicht über eine Vielzahl von Modulationsperioden in dem jeweiligen Empfangspixel akkumuliert werden, um ein möglichst genaues Ergebnis für die Phasenlage des Empfangslichts zu erhalten. Von Vorteil ist dabei insbesondere, dass die Routingschicht mit sehr hohen Frequenzen betreibbar ist, so dass auch Phasenunterschiede für sehr hohe Modulationsfrequenzen des Sendesignals aufgelöst werden können. Insbesondere ist die Modulationsfrequenz des Sendesignals höher als 50 MHz, höher als 100 MHz oder höher als 200 MHz oder höher als 500 MHz oder höher als 1 GHz oder 10 GHz. In diesen Frequenzbereichen kann insbesondere der Modulationskontrast bei Lock-in-Pixeln abnehmen, was zu einer verminderten Genauigkeit in der Entfernungsmessung führt.

Insbesondere kann das Empfangslicht innerhalb einer Modulationsperiode, d.h. innerhalb einer Zeitdauer von $\frac{1}{Modulationsfrequenz}$, den jeweiligen Empfangspixeln eines jeden Empfangselements alternierend und/oder nacheinander zugeführt werden, sodass innerhalb einer Modulationsperiode jedes Empfangspixel der Empfangselemente zumindest einen Teil des Empfangslichts empfangen und in unterschiedliche Empfangssignale umwandeln kann. Die Modulationsfrequenz ist dabei bevorzugt die Modulationsfrequenz der Sendelichts.

Durch das sehr schnelle optische Routing bzw. aktive Lenken des Empfangslichts mittels der Routingschicht wird, z.B. im Vergleich zu Lock-in-Pixeln, ferner die Verarbeitung von Modulationsfrequenzen von beispielsweise 1 GHz, 5 GHz, 10 GHz und/oder mehr als 10 GHz möglich, da die Modulationsfrequenz nicht mehr von der Transportgeschwindigkeit der Ladungsträger im Halbleiter abhängt. Aufgrund der hohen Modulationsfrequenzen kann eine verbesserte Tiefenauflösung erreicht werden.

Gemäß einer weiteren Ausführungsform sind die Empfangspixel Teil eines, insbesondere herkömmlichen, CMOS-Bildsensors, wie er beispielsweise in fotografischen Kameras Anwendung findet. Die Empfangspixel sind insbesondere also keine Lock-in-Pixel und/oder umfassen nicht mehrere Bins bzw. Taps. Durch den Einsatz eines derartigen CMOS-Bildsensors können die Herstellungskosten des optoelektronischen Sensors gesenkt werden. Zudem sind solche CMOS-Bildsensoren auch mit hoher Auflösung und hoher Empfindlichkeit verfügbar. Die Empfangspixel können dementsprechend z.B. einen 4T-CMOS-Sensor umfassen. Aber auch die Verwendung eines CCD-Sensors oder eines anderen geeigneten Sensors ist alternativ möglich. Der komplexe Aufbau der Lock-in-Pixel wird durch solche Bildsensoren vermieden.

Im Folgenden werden nun noch weitere Details der Routingschicht und Empfangspixel erläutert: Insbesondere umfasst die Routingschicht eine Vielzahl von Partitionen, welche jeweils einem Empfangselement zugehörig sind, wobei jede der Vielzahl von Partitionen das Empfangslicht zumindest im Wesentlichen nur den Empfangspixeln des der Partition zugehörigen Empfangselements zuführt. Eine Partition ist insbesondere ein abgegrenzter und/oder selbstständiger Teil der Routingschicht. Die Partition kann in Draufsicht beispielsweise quadratisch oder rechteckig ausgebildet sein. Die Größe der Partition kann zumindest im Wesentlichen der Größe der der Partition zugehörigen Empfangspixel sein. Eine Partition kann dabei eine eigenständige Funktionseinheit sein, welche die Funktionen der Routingschicht unabhängig von den anderen Partitionen der Routingschicht ausführen kann. Eine Partition kann die Funktion bereitstellen, das Empfangslicht zu bündeln und/oder den Empfangspixeln des Empfangselements zuzuführen. Die Partition der Routingschicht kann aufgrund ihrer geringen Größe beim Zuführen von Empfangslicht ein schnelles Umschalten zwischen den einzelnen Empfangspixeln gestatten. Die Verarbeitung besonders hoher Modulationsfrequenzen wird damit ermöglicht. Zudem kann bei einem Ausfall und/oder einer Fehlfunktion einer Partition der Betrieb der noch funktionsfähigen Partitionen der Routingschicht ungehindert fortgeführt werden. Die Anzahl der Partitionen der Routingschicht ist bevorzugt abhängig von und insbesondere gleich der Anzahl an Empfangselementen.

Optional umfasst die Routingschicht eine erste und eine zweite Schicht, wobei die zweite Schicht dazu ausgebildet ist, das Empfangslicht nacheinander und/oder alternierend den Empfangspixeln des Empfangselements zuzuführen. Die erste und zweite Schicht der Routingschicht können unterschiedliche Funktionen aufweisen, wobei die erste Schicht das Empfangslicht aufnehmen kann und vorzugsweise gebündelt auf die zweite Schicht weiterleitet, welche das Empfangslicht z.B. in einer vordefinierten Reihenfolge nacheinander den Empfangspixeln des Empfangselements zuführt. Die erste und zweite Schicht der Routingschicht können ferner als eine Baugruppe realisiert werden. Beispielsweise werden die beiden Schichten im Herstellungsprozess als eine Baugruppe realisiert. Alternativ ist es auch möglich, dass die Routingschicht nur eine Schicht umfasst, welche die gesamten Funktionen der ersten und zweiten Schicht ausführt.

Insbesondere umfasst die erste und/oder die zweite Schicht eine Vielzahl von Linsen. Beispielsweise umfasst jede Partition der Routingschicht eine Linse, insbesondere nur eine Linse. Die Linsen können beispielsweise das Empfangslicht bündeln und/oder gezielt ablenken. Insbesondere können die Linsen eine konkave, konvexe und/oder eine andere geeignete Form aufweisen, wobei die Linsen vorzugsweise konkav sind.

Bevorzugt ist die erste Schicht dazu ausgebildet, das Empfangslicht auf die zweite Schicht zu lenken, wobei die zweite Schicht elektrisch steuerbar ist, um das Empfangslicht nacheinander und/oder alternierend den Empfangspixeln des Empfangselements zuzuführen. Die erste Schicht der Routingschicht kann das Empfangslicht, vorzugsweise mittels der erwähnten Linsen, lenken und/oder formen und das Empfangslicht der zweiten Schicht zuführen. Die zweite Schicht kann elektrisch z.B. mittels einer elektrischen Steuerung (z.B. durch die hierin genannte Auswerteeinheit) gesteuert werden. Die Auswerteeinheit kann ausgebildet sein, eine Ablenkungsrichtung des Empfangslichts festzulegen und insbesondere das Empfangslicht in zwei oder vier unterschiedliche Richtungen alternierend abzulenken. Ferner kann die elektrische Steuerung ausgebildet sein, insbesondere bei mehr als zwei Empfangspixeln pro Empfangselement eine Reihenfolge festzulegen, in der die Empfangspixel der Empfangselemente mit dem Empfangslicht bestrahlt werden.

Die zweite Schicht kann die Ablenkung des Empfangslichts auf die einzelnen Empfangspixel beispielsweise mittels Mikrospiegeln und/oder durch Prismen, bei welchen der Brechungsindex und damit die Ausbreitungsrichtung des Empfangslichts elektrooptisch verändert wird und/oder andere geeignete Mittel bewirken. Insbesondere kann der Brechungsindex mit einer Vielzahl von elektrooptischen Effekten verändert und/oder eingestellt werden. Beispielsweise können Phase-Change-Materials, die z.B. zwischen kristallin und amorph wechseln, TCOs (transparent conductive oxides), die durch Anlegen einer Spannung und/oder Änderung der Ladungsträgerdichte z.B. eine Plasmafrequenz und damit den Brechungsindex verändern, und/oder organische elektrooptische Materialien wie DAST verwendet werden. Allgemein ist im Bereich der photonisch integrierten Optik eine Vielzahl von Materialien, Ansätzen und elektrooptischen Effekten bekannt, die zum schnellen Schalten von Licht benutzt werden können. Die zweite Schicht kann die vorstehend genannten Mittel umfassen.

Die zweite Schicht kann ferner dazu ausgebildet sein, das Empfangslicht abhängig von der Polarisation des Empfangslichts abzulenken. Insbesondere kann die zweite Schicht polarisationsabhängige Linsen, Metaoberflächen und/oder Polarisationsfilter umfassen. Metaoberflächen, die die so genannte Pancharatnam-Berry Phase kontrollieren und somit eine polarisationsabhängige Strahlformung und - ablenkung eines Lichtstrahls ermöglichen, sind aus der Literatur bekannt (z.B. "Multifunctional Metamirror: Polarization Splitting and Focusing", ACS Photonics 2018 5 (5), DOI: 10.1021/acsphotonics.7b01091 oder "Reflective metalens with sub-diffraction-limited and multifunctional focusing", Sci Rep 7, 12632 (2017). DOI: 10.1038/s41598-017-13004-z). In der ersten Schicht kann beispielsweise in jeder Modulationsperiode eine zeitweilige Veränderung der Polarisation des Empfangslichts vorgenommen werden. Durch die polarisationsabhängige Ablenkung des Empfangslichts in der zweiten Schicht kann das Empfangslicht somit nacheinander und/oder alternierend verschiedenen Empfangspixeln zugeführt werden.

Insbesondere ist die erste Schicht ausgebildet, die Polarisation des Empfangslichts wahlweise (d.h. beispielsweise auf ein Steuersignal der Auswerteeinheit hin) zu ändern, und ist die zweite Schicht ausgebildet, abhängig von der Polarisation des Empfangslichts das Empfangslicht unterschiedlichen Empfangspixeln der Empfangselemente zuzuführen. Beispielsweise kann das ausgesendete Sendelicht und somit das von dem Objekt in der Umgebung entsprechend zurückgestrahlte Empfangslicht eine bestimmte Polarisation aufweisen. Die erste Schicht der Routing-Schicht kann das auf die erste Schicht treffende Empfangslicht in seiner Polarisation verändern. Beispielsweise kann die erste Schicht für vorbestimmte Zeitdauern linkszirkular-polarisiertes Empfangslicht zu rechtszirkularpolarisiertem Empfangslicht umwandeln oder umgekehrt. Zur Veränderung der Polarisation kann die erste Schicht eine optisch aktive Schicht und/oder jedes andere dafür geeignete Mittel umfassen.

Grundsätzlich kann die zweite Schicht ausgebildet sein, das Empfangslicht abhängig von dessen Polarisation, Amplitude und/oder Wellenlänge abzulenken. Die erste Schicht kann dabei eine entsprechende Veränderung des Empfangslichts vornehmen.

Das Zuführen von Empfangslicht zu den einzelnen Empfangspixeln der Empfangselemente kann mittels der elektrischen Steuerung somit angepasst werden und insbesondere an Eigenschaften des Empfangslichts und/oder Sendelichts angepasst werden. Beispielsweise kann eine Zeitdauer des Zuführens von Empfangslicht zu einem Empfangspixel und/oder eine Reihenfolge des Zuführens von Empfangslicht an die Modulationsfrequenz des Sende- und/oder Empfangslichts, an die Anzahl den Empfangspixeln pro Empfangselement und/oder an den Typ der Empfangspixel angepasst werden.

Bevorzugt können die Routingschicht oder die erste Schicht oder die zweite Schicht keine beweglichen Teile umfassen. Die Lenkung des Empfangslichts erfolgt dann z.B. nur über elektrooptische Effekte und dergleichen.

Gemäß einer weiteren Ausführungsform sind die Empfangselemente in einer ebenen Fläche angeordnet und bilden insbesondere einen Bildsensor, wobei mehrere Polarisationselemente, bevorzugt direkt, auf der ebenen Fläche angeordnet und/oder angebracht und/oder befestigt sind. Durch die Anordnung als Bildsensor, beispielsweise durch Anordnung der Empfangselemente in gleichmäßigen Zeilen und Spalten kann mit dem optoelektronischen Sensor ein Tiefenbild erzeugt werden. Beispielsweise können die Empfangselemente, wie oben beschrieben, jeweils in Gruppen gegliedert sein, wobei jeweils ein Polarisationselement derart vor einer Gruppe von Empfangselementen angeordnet ist, dass Empfangslicht zunächst durch das Polarisationselement tritt und anschließend auf die Empfangselemente trifft. Insbesondere können die Polarisationselemente direkt an den Empfangselementen befestigt oder auf andere Art und Weise den Empfangselementen vorgelagert im Empfangspfad angeordnet sein. Im Empfangspfad den Polarisationselementen vorgelagert kann noch eine Empfangsoptik angeordnet sein, welche beispielsweise eine Scharfstellung auf unterschiedliche Entfernungsbereiche ermöglicht.

Gemäß einer weiteren Ausführungsform ist der optoelektronische Sensor ausgebildet, das Sendesignal als ein moduliertes Signal zu erzeugen und das Sendelicht (mit der Frequenz des modulierten Signals) zu modulieren. Wie vorstehend schon angedeutet, kann das Sendelicht beispielsweise amplitudenmoduliert sein, wodurch das Empfangslicht dann ebenfalls amplitudenmoduliert ist. Durch die Abtastpunkte, die beispielsweise durch die Lock-in-Pixel oder die Routingschicht mit den Empfangspixeln erzeugt werden, kann dann die Phasenlage des Empfangslichts und damit der Phasenunterschied zwischen Sendelicht bzw. Sendesignal und Empfangslicht bzw. Empfangssignal ermittelt werden.

Gemäß einer weiteren Ausführungsform ist die Lichtquelle dazu ausgebildet, das Sendelicht polarisiert auszusenden und/oder die Polarisation des Sendelichts zu verändern oder einzustellen. Die Veränderung der Polarisation des Sendelichts kann beispielsweise durch vor der Lichtquelle angebrachte unterschiedliche Polarisationsfilter erfolgen. Insbesondere können die Polarisationsfilter gewechselt und/oder gedreht werden, um die Polarisation des Sendelichts zu verändern. Die Polarisation kann zudem auch moduliert sein, so dass sich eine zeitlich veränderliche Modulation ergibt. Hierbei kann der Vorteil bestehen, dass unterschiedlichen Bereichen eines Objekts zu unterschiedlichen Zeiten verschiedene Polarisationen zugeführt werden, so dass jeweils die ideale Polarisation für einen Bereich in das endgültige Tiefenbild aufgenommen werden kann.

Alternativ oder zusätzlich zu den vor der Lichtquelle angebrachten Polarisationsfiltern, kann auch eine Lichtquelle verwendet werden, die direkt polarisiertes Licht aussendet. Beispielsweise kann die Lichtquelle eine Kantenemitter-Laserdiode und/oder eine Oberflächenemitter-Laserdiode (VCSEL - "Vertical-Cavity Surface-Emitting) umfassen. Durch eine veränderbare Polarisation kann auch eine Anpassung des Sendelichts an unterschiedliche Anwendungen erfolgen.

Gemäß einer weiteren Ausführungsform umfasst der optoelektronische Sensor eine Auswerteeinheit, welcher Signale der Empfangselemente zuführbar sind und welche ausgebildet ist, insbesondere für zumindest zwei Empfangselemente separat, aus den Signalen Entfernungsinformationen und/oder Polarisationsinformationen zu ermitteln und/oder auszugeben. Insbesondere kann die Auswerteeinheit mit den Empfangselementen elektrisch, beispielsweise mittels einer Datenverbindung, gekoppelt sein, um die Signale der Empfangselemente zu erhalten. Aus den Signalen kann die Auswerteeinheit dann Entfernungsinformationen und/oder Polarisationsinformationen ermitteln. Die ermittelten Entfernungs- und/oder Polarisationsinformationen können anschließend ausgegeben werden. Bevorzugt erfolgt die Ermittlung der Entfernungsinformationen und/oder Polarisationsinformationen für zumindest zwei der Empfangselemente, bevorzugt für eine Vielzahl der Empfangselemente oder alle Empfangselemente, separat. Für jedes Empfangselement kann also beispielsweise ein eigener Entfernungswert ermittelt werden. Zudem kann für jedes Empfangselement ermittelt werden, mit welcher Polarisation das Empfangslicht auf das jeweilige Empfangselement getroffen ist. Die jeweils auftreffende Polarisation kann auch im Vorhinein bekannt sein (aufgrund des verwendeten Polarisationselements). Aus den verschiedenen Entfernungsinformationen für verschiedene Empfangselemente kann dann ein Tiefenbild erzeugt werden, wie nachfolgend noch genauer erläutert wird.

Gemäß einer weiteren Ausführungsform ist die Auswerteeinheit ausgebildet, aus zumindest einem Teil der Signale der Empfangselemente ein Tiefenbild zu erzeugen, wobei die Auswerteeinheit bevorzugt ausgebildet ist, für zumindest einen Teil des Tiefenbilds eine Auswahl eines Empfangselements aus einer jeweiligen Gruppe von Empfangselementen zu treffen und nur die Signale der ausgewählten Empfangselemente für das Tiefenbild zu verwenden. Durch die Auswahl jeweils (nur) eines Empfangselements aus einer jeweiligen Gruppe von Empfangselementen kann beispielsweise eine Auswahl auf jeweils eine bestimmte Polarisation erfolgen. So kann das Tiefenbild dann beispielsweise basierend nur auf horizontaler oder nur auf vertikaler Polarisation erzeugt werden. Alternativ oder zusätzlich ist es möglich, für zumindest einen Teil oder auch alle Gruppen von Empfangselementen auszuwählen, welche Polarisation in das Tiefenbild einfließen soll. So können beispielsweise Bildbereiche ausgewählt werden, in welchen eine erste Polarisation bessere Tiefenwerte liefert, wo hingegen in einem zweiten Bildbereich eine zweite, andere, Polarisation verwendet wird.

Gemäß einer weiteren Ausführungsform ist die Auswerteeinheit ausgebildet, die Auswahl der Empfangselemente basierend auf einer Signalstärke, insbesondere des Empfangslichts, des jeweiligen Empfangselements durchzuführen. Auf diese Weise können beispielsweise zu starke oder zu schwache (d.h. übersteuerte oder untersteuerte) Signale/Empfangselemente ausgeschlossen werden. Stattdessen kann in der Gruppe von Empfangselementen ein anderes Empfangselement ausgewählt werden, bei welchem eine Übersteuerung oder Untersteuerung nicht vorliegt. Auf diese Weise kann ein Tiefenbild mit einem besseren Dynamikumfang erzeugt werden.

Insbesondere kann aus jeder Gruppe von Empfangselementen bei der Erstellung des Tiefenbilds jeweils ein Empfangselement ausgewählt werden, wobei die Signale des ausgewählten Empfangselements dann als ein einzelnes Pixel in das Tiefenbild Eingang finden.

Weiterer Gegenstand der Erfindung ist ein Verfahren zur Entfernungsmessung mittels eines optoelektronischen Sensors, wobei eine Lichtquelle ein Sendesignal in Sendelicht umwandelt und das Sendelicht in eine Umgebung aussendet und von Objekten in der Umgebung zurückgestrahltes Sendelicht als Empfangslicht von einem Lichtempfänger mittels mehrerer, insbesondere separate, Empfangselemente empfangen wird. Ein Polarisationselement führt Empfangslicht mit einer ersten Polarisation einem der Empfangselemente und Empfangslicht mit einer zweiten Polarisation, welche von der ersten Polarisation verschieden ist, einem anderen der Empfangselemente zu, wobei das zumindest eine Polarisationselement einen Polarisationsrouter umfasst, welcher Empfangslicht unterschiedlicher Polarisation unterschiedlichen Empfangselementen zuführt. Das erfindungsgemäße Verfahren zeichnet sich dadurch aus, dass zumindest eines der Empfangselemente eine Routingschicht und mehrere Empfangspixel umfasst, wobei die Routingschicht auf die Routingschicht treffendes Empfangslicht zeitlich nacheinander verschiedenen der Empfangspixel zuführt, sodass in den Empfangspixeln mehrere Abtastwerte entstehen. Aufgrund der Abtastwerte wird die Phasenlage des Empfangslichts und damit die Phasendifferenz zwischen Sendelicht und Empfangslicht ermittelt.

Die vorstehend getroffenen Aussagen zu dem optoelektronischen Sensor gelten für das erfindungsgemäße Verfahren entsprechend, dies gilt insbesondere hinsichtlich Vorteilen und bevorzugten Ausführungsformen.

Es versteht sich, dass sämtliche hierin beschriebenen Merkmale miteinander kombinierbar sind, sofern nicht explizit etwas Gegenteiliges angegeben ist.

Nachfolgend wird die Erfindung rein beispielhaft unter Bezugnahme auf die Zeichnungen beschrieben. Es zeigen:

**Figur 1** schematisch einen optoelektronischen Sensor, welcher Sendelicht zu einem Objekt emittiert und Empfangslicht vom Objekt empfängt;

**Figur 2** schematisch einen Lichtempfänger des optoelektronischen Sensors gemäß einer nicht erfindungsgemäßen Ausführungsform;

**Figur 3** ein als Polarisationsfilter ausgebildetes Polarisationselement;

**Figur 4** ein als Polarisationsrouter ausgebildetes Polarisationselement;

**Figur 5** schematisch den Lichtempfänger gemäß einer erfindungsgemäßen Ausführungsform, bei welchem das Empfangselement eine Routingschicht aufweist.

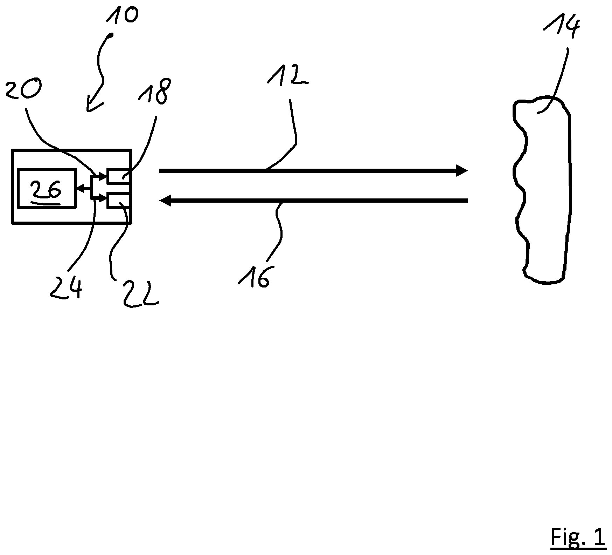

Fig. 1 zeigt einen optoelektronischen Sensor 10, welcher moduliertes Sendelicht 12 auf ein Objekt 14 strahlt. Das Objekt 14 remittiert das Sendelicht 12 als Empfangslicht 16, wobei je nach Auftreffpunkt des Sendelichts 12 auf dem Objekt 14 das Empfangslicht 16 eine unterschiedliche Polarisationsrichtung aufweist.

In dem optoelektronischen Sensor 10 wird dazu das Sendelicht 12 mittels eines Lichtsenders 18 (d.h. einer Lichtquelle) aus einem Sendesignal 20 erzeugt. Das eintreffende Empfangslicht 16 wird von einem Lichtempfänger 22 erfasst, welcher aus dem Empfangslicht 16 ein Empfangssignal 24 erzeugt.

Das Sendesignal 20 wird von einer Auswerteeinheit 26 erzeugt, welche ebenfalls das Empfangssignal 24 erhält und daraus ein Tiefenbild generiert.

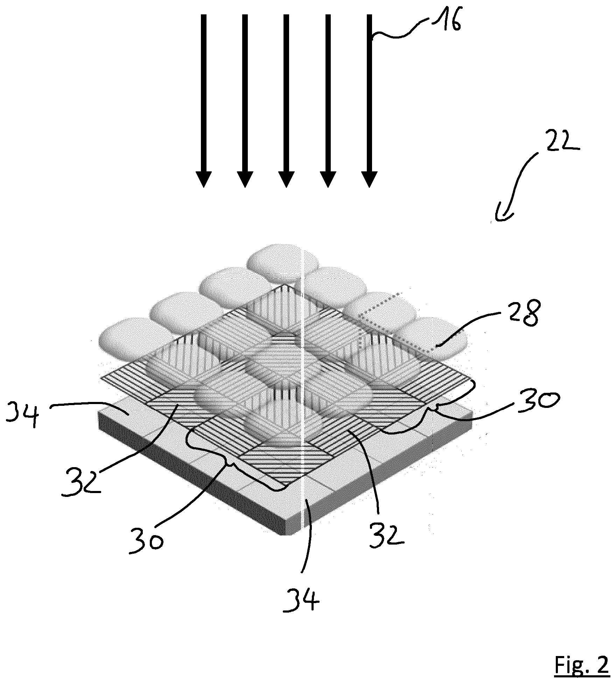

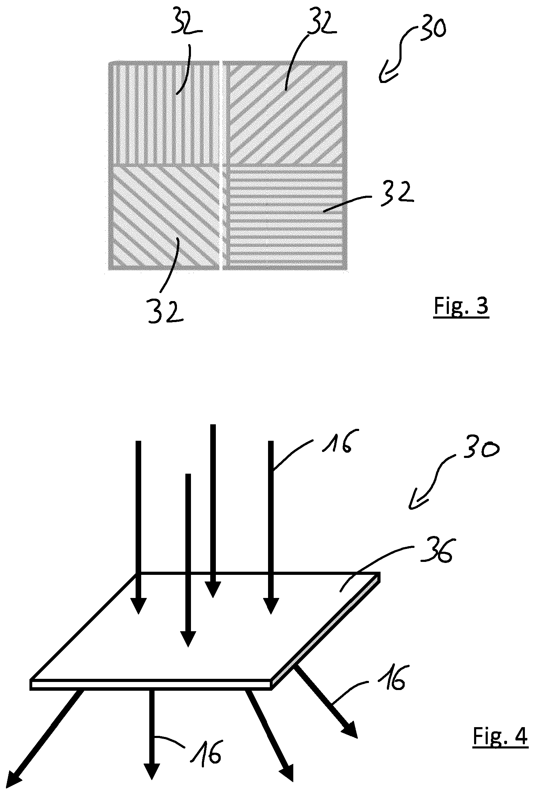

In Fig. 2 ist eine nicht erfindungsgemäße Ausführungsform des Lichtempfängers 22 genauer dargestellt. Der Lichtempfänger 22 umfasst eine Empfangsoptik 28, hier in Form eines Mikrolinsenarrays dargestellt. Unterhalb der Empfangsoptik 28 sind mehrere Polarisationselemente 30 angeordnet. In der beispielhaften Darstellung von Fig. 2 umfasst jedes Polarisationselement 30 vier verschiedene Polarisationsfilter 32, welche auch in Fig. 3 dargestellt sind.

Jeder der einzelnen Polarisationsfilter 32 ist auf einer quadratischen Fläche angeordnet, sodass ein einzelnes Polarisationselement 30 wiederum eine quadratische Fläche belegt. Die vier Polarisationsfilter 32 eines Polarisationselements 30 weisen jeweils eine Polarisationsrichtung auf, die sich um 45° unterscheidet.

Wiederum unterhalb der Polarisationselemente 30 sind Empfangselemente 34 angeordnet. Jedem Polarisationselement 30 (mit vier verschiedenen in einem Quadrat angeordneten Polarisationsfiltern 32) sind dabei vier Empfangselemente 34 zugeordnet, jedem der einzelnen Polarisationsfilter 32 eines. Die vier einem Polarisationselement 30 zugeordneten Empfangselemente 34 bilden dabei eine Gruppe. Die Empfangselemente 34 können in dem in Fig. 2 gezeigten Beispiel als Lock-in-Pixel ausgebildet sein.

Zu dem Lichtempfänger 22 gelangendes Empfangslicht 16 erreicht zunächst die Empfangsoptik 28 und wird von der Empfangsoptik 28 auf die Polarisationselemente 30 geleitet. Die einzelnen Polarisationsfilter 32 der Polarisationselemente 30 lassen jeweils nur Empfangslicht 16 einer bestimmten Polarisation passieren und auf das unter dem jeweiligen Polarisationsfilter 32 liegende Empfangselement 34 auftreffen. In dem Empfangselement 34 kann dann ein Empfangssignal 24 erzeugt werden, durch welches die Auswerteeinheit 26 in der Lage ist, einen Phasenversatz zu dem modulierten Sendelicht 12 zu ermitteln, woraus sich dann für jedes Empfangselement 34 ein Tiefenwert ergibt.

Als Alternative zu der in Fig. 3 gezeigten Ausführung des Polarisationselements 30 mit Polarisationsfiltern 32, zeigt die Fig. 4 ein Polarisationselement 30, welches als Polarisationsrouter 36 ausgebildet ist. Dabei ist in Fig. 4 zu erkennen, dass auf dem Polarisationsrouter 36 auftreffendes Empfangslicht 16 in Abhängigkeit seiner Polarisation in unterschiedliche Raumrichtungen von den Polarisationsrouter 36 abgelenkt wird.

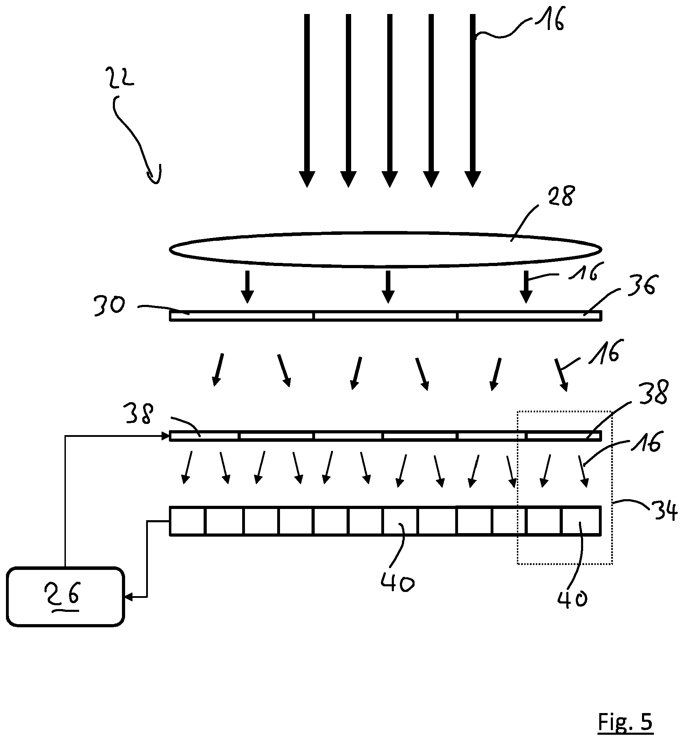

In Fig. 5 ist eine erfindungsgemäße Ausführungsform des Lichtempfängers 22 dargestellt. Gemäß der Ausführungsform von Fig. 5 umfasst der Lichtempfänger 22 ebenfalls eine Empfangsoptik 28 in Form einer Einzellinse sowie Polarisationselemente 30 in Form von Polarisationsroutern 36. Die Polarisationsrouter 36 führen in Abhängigkeit der Polarisation des Empfangslichts 16 das Empfangslicht unterschiedlichen Empfangselementen 34 zu, von welchem in Fig. 5 sechs gezeigt sind. Jedes Empfangselement 34 gemäß der Ausführungsform von Fig. 5 umfasst eine Routingschicht 38, welche das Empfangslicht 16 zyklisch nacheinander und wiederholt auf vier Empfangspixel in Form von CMOS-Bildsensoren 40 projiziert. Von den vier CMOS-Bildsensoren 40 sind in Fig. 4 pro Empfangselement 34 nur zwei gezeigt.

Die Routingschicht 38 wird dabei von der Auswerteeinheit 26 angesteuert, um das zyklische Zuführen des Empfangslichts 16 in Abhängigkeit der Modulation des Sendelichts 12 vorzunehmen. Die Auswerteeinheit 26 liest anschließend die CMOS-Bildsensoren 40 aus, um vier Abtastpunkte zu erhalten, aus welchen sich die Phasenlage des Empfangslichts 16 rekonstruieren lässt. Daraus kann wiederum der Phasenunterschied zum Sendesignal 20 bzw. zum Sendelicht 12 und daraus die Entfernung zum Objekt 14 für jedes Empfangselement 34 bestimmt werden.

Aus den so erhaltenen Entfernungen kann die Auswerteeinheit 26 ein Tiefenbild erzeugen, welches für alle Bildpunkte dieselbe Polarisation des Empfangslichts 16 auswertet oder welches für verschiedene Bereiche verschiedene Polarisationen des Empfangslichts 16 verwendet.

Bezugszeichenliste

10 elektronischer Sensor
12 Sendelicht
14 Objekt
16 Empfangslicht
18 Lichtsender
20 Sendesignal
22 Lichtempfänger
24 Empfangssignal
26 Auswerteeinheit
28 Empfangsoptik
30 Polarisationselement
32 Polarisationsfilter
34 Empfangselement

36 Polarisationsrouter
38 Routingschicht
40 CMOS-Bildsensor

**Patentansprüche**

1. Optoelektronischer Sensor (10) zur Entfernungsmessung, umfassend:

   eine Lichtquelle (18), welche dazu ausgebildet ist, ein Sendesignal (20) in Sendelicht (12) umzuwandeln und das Sendelicht (12) in eine Umgebung auszusenden,
   einen Lichtempfänger (22), welcher von Objekten (14) in der Umgebung zurückgestrahltes Sendelicht (12) als Empfangslicht (16) empfängt, wobei der Lichtempfänger (22) mehrere Empfangselemente (34) zur Entfernungsmessung aufweist, wobei der Lichtempfänger (22) zumindest ein Polarisationselement (30) umfasst, welches ausgebildet ist, Empfangslicht (16) mit einer ersten Polarisation einem der Empfangselemente (34) und Empfangslicht (16) mit einer zweiten Polarisation, welche von der ersten Polarisation verschieden ist, einem anderen der Empfangselemente (34) zuzuführen, wobei das zumindest eine Polarisationselement (30) einen Polarisationsrouter (36) umfasst, welcher Empfangslicht (16) unterschiedlicher Polarisation unterschiedlichen Empfangselementen (34) zuführt,
   **dadurch gekennzeichnet, dass**
   zumindest eines der Empfangselemente (34) eine Routingschicht (38) und mehrere Empfangspixel (40) umfasst, wobei die Routingschicht (38) ausgebildet ist, auf die Routingschicht (38) treffendes Empfangslicht (16) zeitlich nacheinander verschiedenen der Empfangspixel (40) zuzuführen, sodass in den Empfangspixeln (40) mehrere Abtastwerte entstehen,
   wobei aufgrund der Abtastwerte die Phasenlage des Empfangslichts (16) und damit die Phasendifferenz zwischen Sendelicht (12) und Empfangslicht (16) ermittelt wird.

2. Optoelektronischer Sensor (10) nach Anspruch 1, wobei jeweils mehrere der Empfangselemente (34) eine Gruppe bilden, wobei zumindest einer der Gruppen ein separates Polarisationselement (30) zugeordnet ist, welches Empfangslicht (16) den Empfangselementen (34) der Gruppe zuführt.

3. Optoelektronischer Sensor (10) nach Anspruch 1 oder 2,
   wobei das zumindest eine Polarisationselement (30) zumindest zwei, bevorzugt vier, Polarisationsfilter (32) umfasst, wobei die verschiedenen Polarisationsfilter (32) jeweils für Empfangslicht (16) unterschiedlicher Polarisationen durchlässig sind, wobei bevorzugt jeder Polarisationsfilter (32) nur einem Empfangselement (34) zugeordnet ist und im Wesentlichen Empfangslicht (16) nur dem zugeordneten Empfangselement (34) zuführt.

4. Optoelektronischer Sensor (10) nach einem der vorstehenden Ansprüche, wobei zumindest eines der Empfangselemente (34) ein Lock-in-Pixel umfasst, insbesondere ein 4-Tap-Lock-in-Pixel.

5. Optoelektronischer Sensor (10) nach einem der vorstehenden Ansprüche, wobei die Routingschicht (38) ausgebildet ist, das Zuführen des Empfangslichts (16) an die verschiedenen Empfangspixel (40) in Abhängigkeit einer Modulation des Sendelichts (12) und/oder Sendesignals (20) vorzunehmen.

6. Optoelektronischer Sensor (10) nach einem der vorstehenden Ansprüche, wobei die Empfangspixel (40) Teil eines CMOS-Bildsensors sind.

7. Optoelektronischer Sensor (10) nach einem der vorstehenden Ansprüche, wobei die Empfangselemente (34) in einer ebenen Fläche angeordnet sind und insbesondere einen Bildsensor bilden, wobei mehrere Polarisationselemente (30), bevorzugt direkt, auf der ebenen Fläche angeordnet oder angebracht sind.

8. Optoelektronischer Sensor (10) nach einem der vorstehenden Ansprüche, wobei der optoelektronische Sensor (10) ausgebildet ist, das Sendesignal (20) als ein moduliertes Signal zu erzeugen und das Sendelicht (12) zu modulieren.

9. Optoelektronischer Sensor (10) nach einem der vorstehenden Ansprüche, wobei die Lichtquelle (18) dazu ausgebildet ist, das Sendelicht (12) polarisiert auszusenden und/oder die Polarisation des Sendelichts (12) zu verändern.

10. Optoelektronischer Sensor (10) nach einem der vorstehenden Ansprüche, wobei der optoelektronische Sensor (10) eine Auswerteeinheit (26) umfasst, welcher Signale der Empfangselemente (34) zuführbar sind und welche ausgebildet ist, insbesondere für zumindest zwei Empfangselemente (34) separat, aus den Signalen Entfernungsinformationen und/oder Polarisationsinformationen auszugeben und/oder zu ermitteln.

11. Optoelektronischer Sensor (10) nach zumindest Anspruch 2 und Anspruch 10,
    wobei die Auswerteeinheit (26) ausgebildet ist, aus zumindest einem Teil der Signale der Empfangselemente (34) ein Tiefenbild zu erzeugen, wobei die Auswerteeinheit (26) bevorzugt ausgebildet ist, für zumindest einen Teil des Tiefenbilds eine Auswahl eines Empfangselements (34) aus einer jeweiligen Gruppe von Empfangselementen (34) zu treffen und nur die Signale der ausgewählten Empfangselemente (34) für das Tiefenbild zu verwenden.

12. Optoelektronischer Sensor (10) nach Anspruch 11, wobei die Auswerteeinheit (26) so ausgebildet ist, dass die Auswahl der Empfangselemente (34) basierend auf einer Signalstärke des jeweiligen Empfangselements (34) erfolgt.

13. Verfahren zur Entfernungsmessung mittels eines optoelektronischen Sensors (10), wobei

- eine Lichtquelle (18) ein Sendesignal (20) in Sendelicht (12) umwandelt und das Sendelicht (12) in eine Umgebung aussendet,
- von Objekten (14) in der Umgebung zurückgestrahltes Sendelicht (12) als Empfangslicht (16) von einem Lichtempfänger (22) mittels mehrerer Empfangselemente (34) empfangen wird, und
- ein Polarisationselement (30) Empfangslicht (16) mit einer ersten Polarisation einem der Empfangselemente (34) und Empfangslicht (16) mit einer zweiten Polarisation, welche von der ersten Polarisation verschieden ist, einem anderen der Empfangselemente (34) zuführt, wobei das zumindest eine Polarisationselement (30) einen Polarisationsrouter (36) umfasst, welcher Empfangslicht (16) unterschiedlicher Polarisation unterschiedlichen Empfangselementen (34) zuführt,

**dadurch gekennzeichnet, dass**

zumindest eines der Empfangselemente (34) eine Routingschicht (38) und mehrere Empfangspixel (40) umfasst, wobei die Routingschicht (38) auf die Routingschicht (38) treffendes Empfangslicht (16) zeitlich nacheinander verschiedenen der Empfangspixel (40) zuführt, sodass in den Empfangspixeln (40) mehrere Abtastwerte entstehen, wobei aufgrund der Abtastwerte die Phasenlage des Empfangslichts (16) und damit die Phasendifferenz zwischen Sendelicht (12) und Empfangslicht (16) ermittelt wird.

**Claims**

1. An optoelectronic sensor (10) for distance measurement, comprising:

a light source (18) which is configured to convert a transmission signal (20) into transmission light (12) and to transmit the transmission light (12) into an environment;
a light receiver (22) which receives transmission light (12) reflected back from objects (14) in the environment as reception light (16), wherein the light receiver (22) has a plurality of reception elements (34) for distance measurement, wherein the light receiver (22) comprises at least one polarization element (30) which is configured to feed reception light (16) with a first polarization to one of the reception elements (34) and reception light (16) with a second polarization, which is different from the first polarization, to another of the reception elements (34), wherein the at least one polarization element (30) comprises a polarization router (36) which feeds reception light (16) of different polarization to different reception elements (34),
**characterized in that**
at least one of the reception elements (34) comprises a routing layer (38) and a plurality of reception pixels (40), with the routing layer (38) being configured to feed reception light (16) incident on the routing layer (38) to different ones of the reception pixels (40) successively in time so that a plurality of sampling values are produced in the reception pixels (40),
wherein the phase position of the reception light (16), and thus the phase difference between the transmission light (12) and the reception light (16), is determined on the basis of the sampling values.

2. An optoelectronic sensor (10) according to claim 1, wherein a plurality of the reception elements (34) form a group in each case, wherein at least one of the groups is assigned a separate polarization element (30) which feeds reception light (16) to the reception elements (34) of the group.

3. An optoelectronic sensor (10) according to claim 1 or 2, wherein the at least one polarization element (30) comprises at least two, preferably four, polarization filters (32), wherein the different polarization filters (32) are each permeable for reception light (16) of different polarization, wherein preferably each polarization filter (32) is associated with only one reception element (34) and substantially feeds reception light (16) only to the associated reception element (34).

4. An optoelectronic sensor (10) according to any one of the preceding claims, wherein at least one of the reception elements (34) comprises a lock-in pixel, in particular a 4-tap lock-in pixel.

5. An optoelectronic sensor (10) according to any one of the preceding claims, wherein the routing layer (38) is configured to feed the reception light (16) to the different reception pixels (40) in dependence on a modulation of the transmission light (12) and/or transmission signal (20).

6. An optoelectronic sensor (10) according to any one of the preceding claims, wherein the reception pixels (40) are part of a CMOS image sensor.

7. An optoelectronic sensor (10) according to any one of the preceding claims, wherein the reception elements (34) are arranged in a planar surface and in particular form an image sensor, wherein a plurality of polarization elements (30) are arranged or attached, preferably directly, on the planar surface.

8. An optoelectronic sensor (10) according to any one of the preceding claims, wherein the optoelectronic sensor (10) is configured to generate the transmission signal (20) as a modulated signal and to modulate the transmission light (12).

9. An optoelectronic sensor (10) according to any one of the preceding claims, wherein the light source (18) is configured to transmit the transmission light (12) in a polarized manner and/or to change the polarization of the transmission light (12).

10. An optoelectronic sensor (10) according to any one of the preceding claims, wherein the optoelectronic sensor (10) comprises an evaluation unit (26) to which signals of the reception elements (34) can be fed and which is configured, in particular for at least two reception elements (34) separately, to output and/or to determine distance information and/or polarization information from the signals.

11. An optoelectronic sensor (10) according to at least claim 2 and claim 10,
wherein the evaluation unit (26) is configured to generate a depth image from at least some of the signals of the reception elements (34), wherein the evaluation unit (26) is preferably configured to make a selection of a reception element (34) from a respective group of reception elements (34) for at least a part of the depth image and to use only the signals of the selected reception elements (34) for the depth image.

12. An optoelectronic sensor (10) according to claim 11, wherein the evaluation unit (26) is configured such that the selection of the reception elements (34) is based on a signal strength of the respective reception element (34).

13. A method for distance measurement by means of an optoelectronic sensor (10), wherein

- a light source (18) converts a transmission signal (20) into transmission light (12) and transmits the transmission light (12) into an environment,
- transmission light (12) reflected back from objects (14) in the environment is received as reception light (16) by a light receiver (22) by means of a plurality of reception elements (34), and
- a polarization element (30) feeds reception light (16) with a first polarization to one of the reception elements (34) and reception light (16) with a second polarization, which is different from the first polarization, to another of the reception elements (34), wherein the at least one polarization element (30) comprises a polarization router (36) which feeds reception light (16) of different polarization to different reception elements (34),

**characterized in that**

at least one of the reception elements (34) comprises a routing layer (38) and a plurality of reception pixels (40), wherein the routing layer (38) feeds reception light (16) incident on the routing layer (38) to different ones of the reception pixels (40) successively in time so that a plurality of sampling values are produced in the reception pixels (40),
wherein the phase position of the reception light (16), and thus the phase difference between the transmission light (12) and the reception light (16), is determined on the basis of the sampling values.

**Revendications**

1. Capteur optoélectronique (10) destiné à la mesure de distances, comprenant :

une source de lumière (18) conçue pour convertir un signal d'émission (20) en lumière d'émission (12) et pour émettre la lumière d'émission (12) dans un environnement,
un récepteur de lumière (22) qui reçoit en tant que lumière de réception (16) la lumière d'émission (12) réfléchie par des objets (14) situés dans l'environnement, le récepteur de lumière (22) comportant plusieurs éléments de réception (34) destinés à la mesure de distances, le récepteur de lumière (22) comprenant au moins un élément polarisant (30) conçu pour amener à l'un des éléments de réception (34) la lumière de réception (16) avec une première polarisation et pour amener à un autre élément de réception (34) la lumière de réception (16) avec une deuxième polarisation,

différente de la première polarisation, ledit au moins un élément polarisant (30) comprenant un routeur de polarisation (36) qui amène la lumière de réception (16) de polarisations différentes à différents éléments de réception (34), **caractérisé en ce que**

l'un au moins des éléments de réception (34) comprend une couche de routage (38) et plusieurs pixels de réception (40), la couche de routage (38) étant conçue pour amener la lumière de réception (16), incidente sur la couche de routage (38), successivement à différents pixels de réception (40), de sorte que plusieurs valeurs d'échantillonnage sont générées dans les pixels de réception (40),

les valeurs d'échantillonnage permettent de déterminer la position de phase de la lumière de réception (16) et donc la différence de phase entre la lumière d'émission (12) et la lumière de réception (16).

2. Capteur optoélectronique (10) selon la revendication 1,

dans lequel plusieurs éléments de réception (34) forment un groupe respectif,
l'un au moins des groupes est associé à un élément polarisant (30) distinct qui amène la lumière de réception (16) aux éléments de réception (34) du groupe.

3. Capteur optoélectronique (10) selon la revendication 1 ou 2,

dans lequel ledit au moins un élément polarisant (30) comprend au moins deux, de préférence quatre, filtres polarisants (32),
les différents filtres polarisants (32) sont chacun transparents à la lumière de réception (16) de polarisations différentes,
de préférence, chaque filtre polarisant (32) est associé à un seul élément de réception (34) et amène la lumière de réception (16) uniquement à l'élément de réception associé (34).

4. Capteur optoélectronique (10) selon l'une des revendications précédentes, dans lequel l'un au moins des éléments de réception (34) comprend un pixel Lock-in, en particulier un pixel 4-Tap-Lock-in.

5. Capteur optoélectronique (10) selon l'une des revendications précédentes, dans lequel la couche de routage (38) est conçue pour amener la lumière de réception (16) aux différents pixels de réception (40) en fonction d'une modulation de la lumière d'émission (12) et/ou du signal d'émission (20).

6. Capteur optoélectronique (10) selon l'une des revendications précédentes, dans lequel les pixels de réception (40) font partie d'un capteur d'image CMOS.

7. Capteur optoélectronique (10) selon l'une des revendications précédentes, dans lequel les éléments de réception (34) sont disposés dans une surface plane et, en particulier, forment un capteur d'image, plusieurs éléments polarisants (30) sont disposés ou montés, de préférence directement, sur la surface plane.

8. Capteur optoélectronique (10) selon l'une des revendications précédentes, dans lequel le capteur optoélectronique (10) est conçu pour générer le signal d'émission (20) sous forme de signal modulé et pour moduler la lumière d'émission (12).

9. Capteur optoélectronique (10) selon l'une des revendications précédentes, dans lequel la source de lumière (18) est conçue pour émettre la lumière d'émission (12) de manière polarisée et/ou pour modifier la polarisation de la lumière d'émission (12).

10. Capteur optoélectronique (10) selon l'une des revendications précédentes, dans lequel le capteur optoélectronique (10) comprend une unité d'évaluation (26) à laquelle peuvent être amenés des signaux provenant des éléments de réception (34) et qui est conçue pour extraire et/ou déterminer des informations de distance et/ou des informations de polarisation à partir des signaux, et ceci en particulier séparément pour au moins deux éléments de réception (34).

11. Capteur optoélectronique (10) selon au moins les revendications 2 et 10, dans lequel l'unité d'évaluation (26) est conçue pour générer une image de profondeur à partir d'au moins une partie des signaux provenant des éléments de réception (34), de préférence, l'unité d'évaluation (26) est conçue pour sélectionner un élément de réception (34) parmi un groupe respectif d'éléments de réception (34) pour au moins une partie de l'image de profondeur et pour n'utiliser que les signaux des éléments de réception (34) sélectionnés pour l'image de profondeur.

12. Capteur optoélectronique (10) selon la revendication 11, dans lequel l'unité d'évaluation (26) est conçue de telle sorte que la sélection des éléments de réception (34) se fait sur la base de l'intensité du signal de l'élément de réception (34) respectif.

**13.** Procédé de mesure de distances au moyen d'un capteur optoélectronique (10), dans lequel

- une source de lumière (18) convertit un signal d'émission (20) en lumière d'émission (12) et émet la lumière d'émission (12) dans un environnement,
- la lumière d'émission (12) réfléchie par des objets (14) situés dans l'environnement est reçue comme lumière de réception (16) par un récepteur de lumière (22) au moyen de plusieurs éléments de réception (34), et
- un élément polarisant (30) amène à l'un des éléments de réception (34) la lumière de réception (16) avec une première polarisation et amène à un autre élément de réception (34) la lumière de réception (16) avec une deuxième polarisation, différente de la première polarisation, ledit au moins un élément polarisant (30) comprenant un routeur de polarisation (36) qui amène la lumière de réception (16) de polarisations différentes à différents éléments de réception (34),

**caractérisé en ce que**

l'un au moins des éléments de réception (34) comprend une couche de routage (38) et plusieurs pixels de réception (40), la couche de routage (38) amène la lumière de réception (16), incidente sur la couche de routage (38), successivement à différents pixels de réception (40), de sorte que plusieurs valeurs d'échantillonnage sont générées dans les pixels de réception (40),

les valeurs d'échantillonnage permettent de déterminer la position de phase de la lumière de réception (16) et donc la différence de phase entre la lumière d'émission (12) et la lumière de réception (16).

10

20   18   12   14

26

24   22   16

<u>Fig. 1</u>

16

22

28

30

34

32

30

32

34

Fig. 2

32    32    30

32

32

Fig. 3

16    30

36

16

16

16

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020107450 A1
- WO 20201021306 A1
- US 20201326563 A1

**In der Beschreibung aufgeführte Nicht-Patentliteratur**

- Multifunctional Metamirror: Polarization Splitting and Focusing. *ACS Photonics*, 2018, vol. 5 (5)
- Reflective metalens with sub-diffraction-limited and multifunctional focusing. *Sci Rep*, 2017, vol. 7, 12632